# EUROPEAN PATENT SPECIFICATION

(11) **EP 3 090 887 B1**
(45) Date of publication and mention of the grant of the patent: **25.09.2019**
(21) Application number: 15166796.1
(22) Date of filing: 07.05.2015
(51) Int. Cl.: B60D 1/14, B60D 1/54, B60D 1/36, B60D 1/155, B60D 1/00

(54) **A TOWING HITCH ASSEMBLY AND A TOWING SYSTEM**
ANHÄNGEKUPPLUNGSANORDNUNG UND ANHÄNGESYSTEM
ENSEMBLE D'ATTELAGE DE REMORQUAGE ET SYSTÈME DE REMORQUAGE

(43) Date of publication of application: 09.11.2016
(73) Proprietor: Toyota Material Handling Manufacturing Sweden AB, 595 81 Mjölby (SE)
(72) Inventor: Lindbom, Henrik, 595 44 Mjölby (SE)
(74) Representative: Zacco Sweden AB

(56) References cited:
- EP-A1- 3 090 888
- DE-A1- 2 939 927
- GB-A- 2 059 896
- GB-A- 2 493 764

## Description

The present invention relates to a towing hitch assembly according to the preamble of claim 1 and a towing system according to claim 9.

### BACKGROUND

In industrial manufacturing facilities it has been more and more common to use auto guided vehicles for transports within the industrial manufacturing facility. The transports can for example be of elements to be assembled at an assembly line or it could be waste products to be disposed of in another part of the facility. The aim of using auto guided vehicles is to increase efficiency and to reduce man hours for simple tasks. The auto guided vehicles can either carry the transported goods by themselves or use another vehicle for carrying the goods. In the latter case some sort of wagon is often used. The document EP3090888 A1 discloses a towing hitch assembly according to the preamble claim 1.

### BRIEF DESCRIPTION OF THE INVENTION

When an auto guided vehicle is used in a towing situation there is a further need to reduce man hours by avoiding human interaction for connection and disconnection of a carrier vehicle from a towing vehicle. In general this can be achieved by having a mechanism on the towing vehicle that disengages a connecting recess on a carrier vehicle. However it has been found that the manoeuvring of the combined system of a towing vehicle and a carrier vehicle can be limited. It has been a challenge to arrive at a solution to this without affecting the possibility to store the carrier vehicle when not in use.

A solution to at least one of the problems discussed above is provided by a towing hitch assembly, wherein the towing hitch assembly comprises a first part that is connectable to a carrier vehicle and a second part which is attachable to a towing vehicle, the second part being slidably moveable relative to the first part, between a first retracted configuration, and a second extended configuration, characterized in that when the first part is attached to a carrier vehicle, a towing vehicle can by engaging a connecting section of the second part, pull the second part to the second extended configuration, wherein the second extended configuration allows for towing the carrier vehicle, and wherein when a towing vehicle disengages the connecting section, the second part will attend the first retracted configuration automatically, by means of an installed retraction device acting to slidably retract the first part.

The above towing hitch assembly has the advantage that the carrier vehicle to which the assembly is to be attached can be stored very conveniently. Another advantage is that the towing hitch assembly can be connected and disconnected automatically, without interaction by any human hand. A further advantage is that the manoeuvrability of a connected towing vehicle is adaptable, without affecting the ability to stow the carrier vehicle.

According to another aspect of the present invention the retracted second part is kept in the first retracted configuration by means of the retraction device.

The advantage of this aspect is that the towing hitch assembly will not unexpectedly move from retracted configuration to extended configuration. Further the advantage is that there is no need for a specific device to keep the towing hitch assembly in position after usage.

According to a further aspect of the retraction device, it comprises a helical spring and/or a gas spring.

This has the advantage that it is cost effective and simple to implement. Another advantage is that it can be acquired of the shelf and need no particular modification for implementation.

According to a further aspect of the connecting section, it comprises a recess.

The advantage of this is that it is particularly easy to connect to the connecting section. A protrusion is simple to implement for a towing vehicle that can connect to the recess.

According to a further aspect, the recess has a triangular shape, preferably the recess has a corner of said triangular shape positioned in the main towing direction of a carrier vehicle, such that when connecting to the recess, guiding may be achieved by the angled sides of the triangular shape.

The advantage of this is that it saves material on the towing hitch, but still provides a large base line where a protrusion of a towing vehicle can access the recess. For comparison a round hole would have to remove considerably more material in order to provide for a comparable base line width. By providing the triangular shape positioned as described, the guiding is provided in a particularly simple manner.

According to a further aspect of the towing hitch assembly a locking device is provided on the second part.

The advantage of providing a locking device on the second part is so to prevent the second from retracting during towing. Instead the second part stays in extended configuration until the towing vehicle is disconnected. This has the further advantage that free movement of the towing vehicle is guaranteed.

According to a further aspect of the locking device, it uses a side of a towing vehicle to be kept in locking position, wherein the side is preferably an upper side of a towing vehicle.

The advantage of using a side of the towing vehicle for keeping the locking device in a locked position is that the locking is particularly simple and there is no need for modification of the towing vehicle. By using the upper side for locking, it provides for using gravity as a means of keeping the locking device in locked position.

According to a further aspect of the locking device it uses gravity to reach the correct positon for being able to engage a towing vehicle, preferably the correct position is reached by using a transversal axis that does not run through the centre of gravity of the locking device .

This configuration of the locking device is particularly advantageous, as no other springs or other devices are needed. Thus it is both reliable and cost effective, and uncomplicated.

According to a further aspect of the invention there is provided a towing system comprising a towing vehicle, a carrier vehicle, and a towing hitch assembly according to any of the aspects above attached to the carrier vehicle.

The towing system is particularly advantageous for transports within a production facility.

According to a further aspect of the towing system, the carrier vehicle comprises two swivelling wheels, preferably four swivelling wheels.

By applying two swivelling wheels to the carrier vehicle, the manoeuvrability of the towing system is considerably increased. It further gives the advantage that if a human desires to move the back end of the carrier vehicle sideways, this can be easily achieved without applying considerably force. If four swivelling wheels are applied, both ends of the carrier vehicle can be moved more freely. If no further wheels in addition to the four swivelling wheels are applied, the carrier vehicle can be moved with ease in any direction.

According to a further aspect of the towing system the carrier vehicle has a limited travel speed of 15 km/h, preferably 7 km/h, even more preferred 3 km/h, and/or the carrier vehicle has a maximum total weight of 400 kg, preferably 200 kg.

By applying a limited travel speed, the vehicle does not risk to damage any persons when moving. It is also an advantage that the carrier vehicle can be designed in a particularly simple manner, thus being very cost effective but also lightweight. The advantage of providing a maximum total weight of 400 kg, or even 200 kg, is that the basic design can be kept simple. It can be made up by a simple frame work construction.

According to a further aspect of the towing system, it is adapted for indoor use only.

The advantage of this aspect is that the towing vehicle, the towing hitch assembly and the carrier vehicle can be made from simple materials that need not be able to manage rain, wind etc. It is a further advantage that the support surface on which the system is to operate is in general flat and without irregularities found outdoors. Thus both the weight and cost of the system can be reduced. Electronics of the towing vehicle need not be water proof. The materials used need not be corrosion resistant and do not need to be stable when exposed to ultraviolet light.

According to a further aspect of the towing vehicle, it has a high point that engages the connecting section of the towing hitch assembly, such that the towing vehicle in full can pass under the towing hitch assembly for engaging the connecting section.

This is particularly advantageous as it provides for a simple and stable towing vehicle. As the towing vehicle is low it does not turn over easily. And further the limited height of the towing vehicle itself provides for a function of connection that does not need any complicated movement patterns by the towing vehicle as it can move forward in an essentially straight line when connecting to the towing hitch assembly. This is in contrast to all other vehicles using a towing hitch which need to move rearwards to a towing hitch prior to connecting to it.

According to another aspect of the towing vehicle, it is an auto guided vehicle, preferably being an electric vehicle.

By having an auto guide vehicle performing the transports and connection and disconnection, the need for human interaction is minimized and the productivity is considerably increased.

According to another aspect of the towing system, the width of the towing vehicle is smaller than the width of the carrier vehicle.

This is an advantage as it assures that the towing vehicle can pass without obstruction or movement of the carrier vehicle.

### LIST OF DRAWINGS

Figure 1 discloses a towing hitch assembly according to one aspect of the invention.
Figure 2 discloses a towing hitch assembly according to Figure 1.
Figure 3 discloses a towing hitch assembly according to one aspect of the invention in retracted configuration.
Figure 4 discloses a towing hitch assembly according to Figure 3 in extended configuration.
Figure 5 discloses a locking device of the first part.
Figure 6 discloses a locking device according to Figure 5 when engaged to an upper side of a towing vehicle.
Figure 7 discloses a towing hitch assembly and a towing system according to one aspect of the invention.
Figure 8 discloses a towing hitch assembly according to the invention connected to a towing vehicle.
Figure 9 discloses a towing hitch assembly and a towing system according to one aspect of the invention.
Figure 10a-d Function of the locking device is disclosed.
Figure 11a and 11b a first part with ball bushings is disclosed.

### DETAILED DESCRIPTION

The general object or idea of embodiments of the present disclosure is to address at least one or some of the disadvantages with the prior art solutions described above as well as below. The various steps described below in connection with the figures should be primarily understood in a logical sense.

The terminology used herein is for the purpose of describing particular aspects of the disclosure only, and is not intended to limit the disclosure to any particular embodiment. As used herein, the singular forms "a", "an" and "the" are intended to include the plural forms as well, unless the context clearly indicates otherwise.

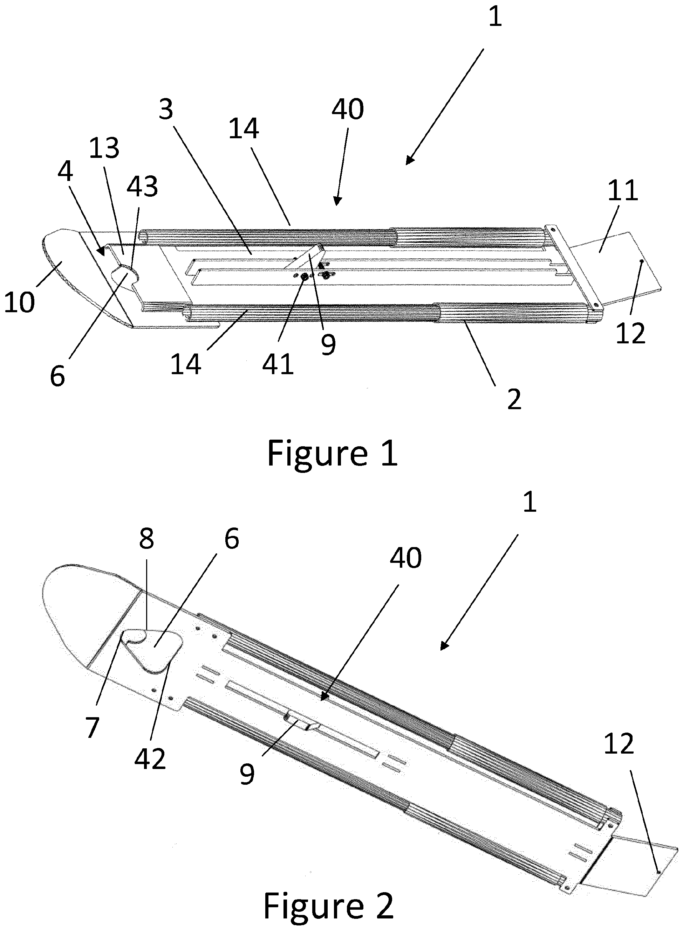

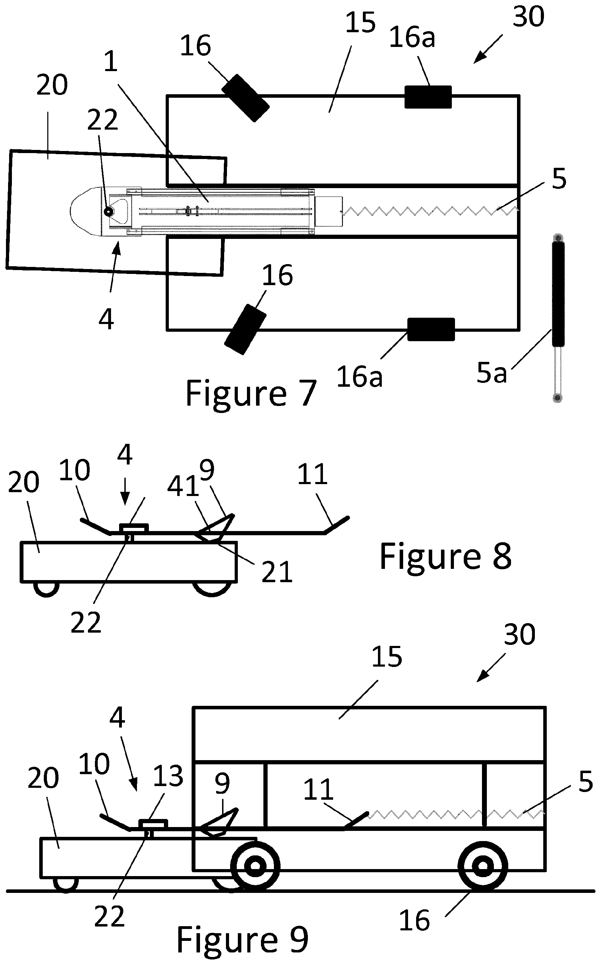

According to Figure 1 it is disclosed a towing hitch assembly 1. The towing hitch assembly has a second part 3 that is slidably engaged in a first part 2. The second part 3 further has a front end 10 and a back end 11. The back end 11 can be connected to a retraction device 5, as seen in Figure 7. The connection between the back end 11 and the retraction device 5 can be made by means of an opening 12 in the back end 11.

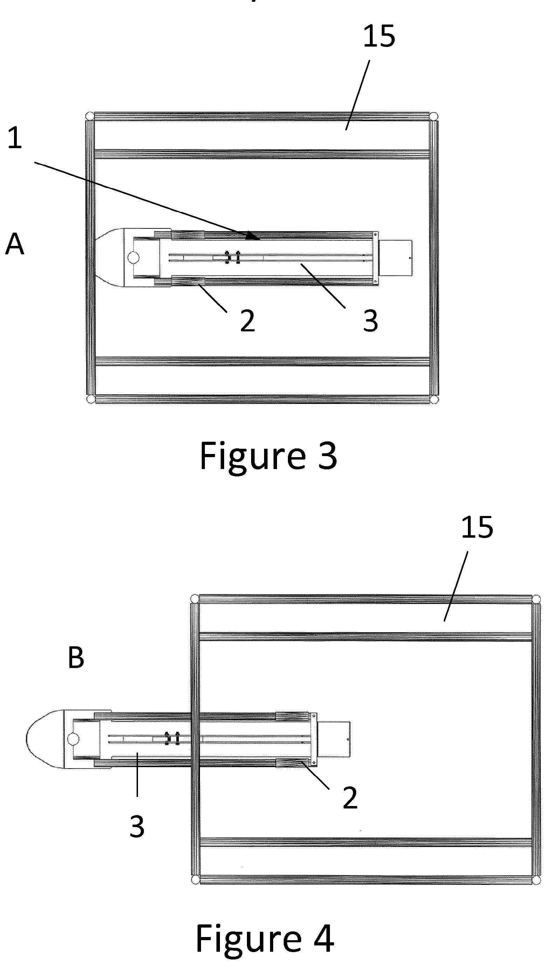

The function of the towing hitch assembly 1 is the following. It is attached to a carrier vehicle 15 underside. A towing vehicle 20 passes under the carrier vehicle 15 and engages a connection section 4 of the first part 2; see for example Figures 7 and 9. As the towing vehicle 20 passes under the carrier vehicle 15, the second part is drawn from a retracted position A to an extended configuration B, as seen in Figure 3 and 4.

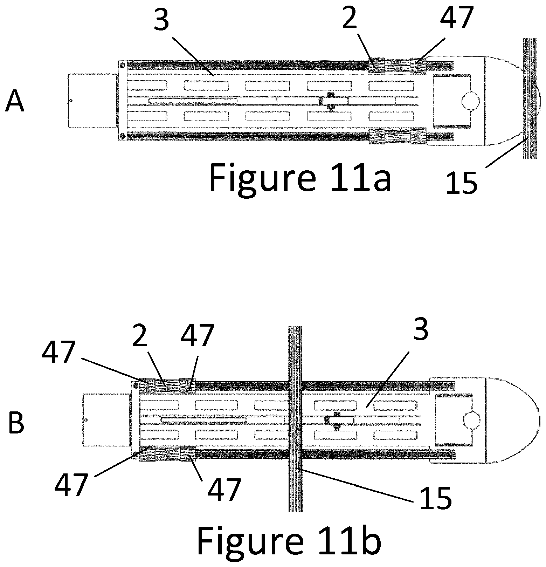

First part 2 is attachable to a carrier vehicle 15, see figure 3 and 4. In general the first part 2 can be made from two essentially parallel tubes. For lowering friction inside the tubes there can be provided a lubricant, such that the second part 3 can slide with ease inside the first part 2. If more guidance is desired it is possible to provide the first part 2 with ball bushings 47, as can be seen in Figure 11a and 11b With two ball bushings 47 at a distance from each other in each tube the friction is considerably lower and the guiding of the second part 3 inside the first part 2 is much improved. However the tube configuration is not mandatory, the first part 2 can be made up from for example squared bars, with a hole. The first part 2 can also be made from a rail and wheel assembly.

The second part 3 is best seen in Figure 1 and Figure 2. The second part 3 comprises a connecting front end 10, a connecting section 4, a locking device 9, and a back end 11. The features will be discussed further below. The second part 3 comprises preferably two longitudinal tubes 14 that can slide inside the first part 2. For the function of the towing hitch assembly 1, it is important that this sliding is performed with as low friction as possible. Even though the tubes 14 are shown to have a circular shape, this is to be understood to not be a mandatory shape. The tubes 14 of the second part 3 could also have a square section, as long as the first part 2 is adapted for good sliding ability. The tubes 14 of the second part 3 need not be completely straight, even though this is preferred for the best sliding ability.

The front end 10 of the first part has a rounded shape. This shape allows for the second part 3 to slide forward in the first part 2 without hooking into a carrier vehicle 15 during extension. The front end 10 is preferably provided at an angle to the main length of the second part 3. The angle ensures that when disconnecting from a towing vehicle 20, the second part 3 cannot hook into protrusions as it slides back. The angle also provides for a towing vehicle 20 that is in the operation to connect to the connecting section 4 by performing moving rearwards towards the towing hitch assembly 1. In particular it is favourable if the towing vehicle 20 has a resilient connecting device 22, the angle helps to push the connecting device 22 downwards such that it can connect to the connecting section 4.

The rear end 11 is angled in the same manner as the front end 10. In particular it is favourable if the towing vehicle 20 has a resilient connecting device 22, the angle helps to push the connecting device 22 downwards such that it can connect to the connecting section 4, when the towing vehicle 20 enters from the rear end 11. As there is no need for a rounded shape for the rear end 11 it can be made with a simple shape as a squared shape. The back end is also provided with a recess 12 for attachment of a retraction device that will be described below. The recess 12 is of course easiest made as a through hole. But it is of course possible to provide an attached hook or an angled edge or any other way of attachment.

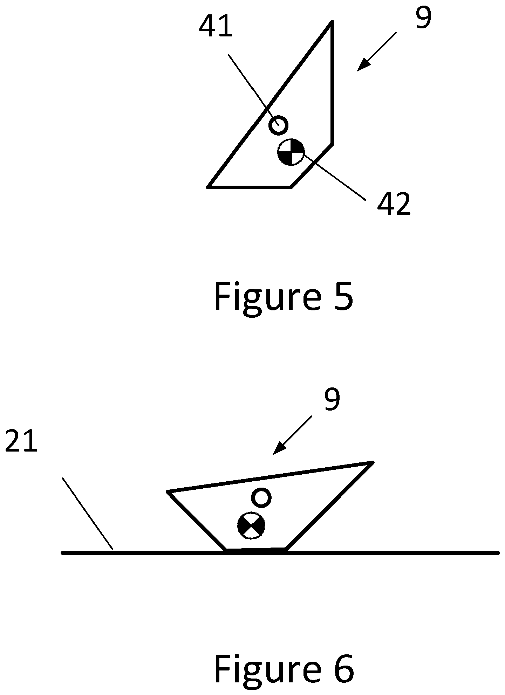

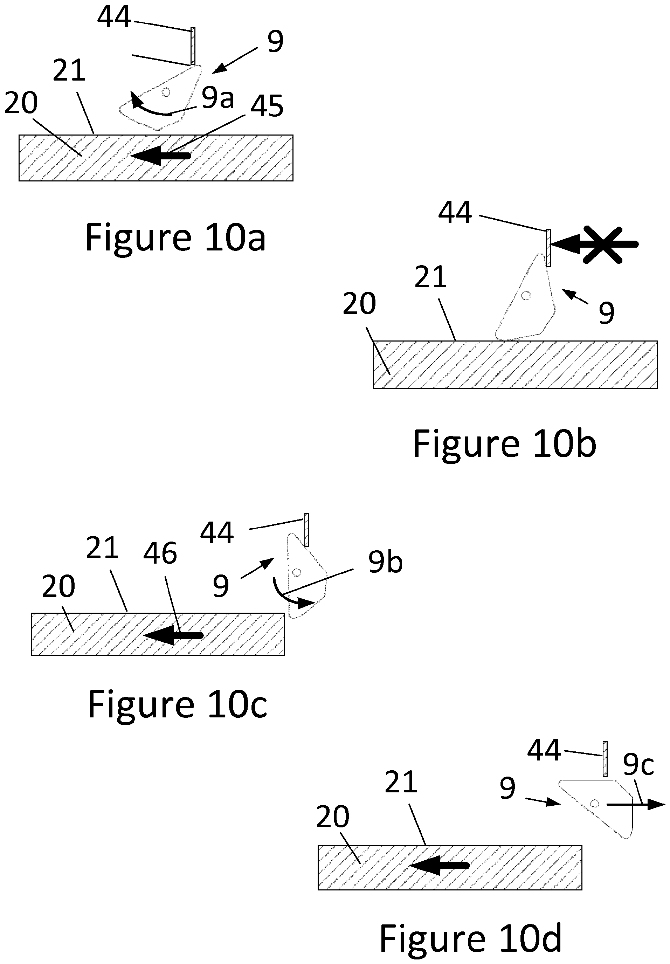

The locking device 9 is provided in a groove in the middle of a central section 40 of the first part. The locking device 9 is preferably made as an irregularly shaped element, as seen in Figure 5 and 6. A through hole 41 is provided. By applying the through hole 41 such that it does not run through the centre of gravity 42 of the locking device 9, the locking device is arranged to swing into a resting position. When a towing vehicle passes by the locking device, it is swung up and remains resting on an upper side 21 of a towing vehicle 20. By this position the locking device, together with a not disclosed rim, prevents the second part 3 from sliding back under the carrier vehicle 15. Other locking systems are of course thinkable. The presented locking device 9 is particularly simple and allows for the important function to allow for automatic retraction of the second part 3 after usage. In figures 10a-d the function can be seen. The locking device 9 locks to the upper side 21 of a towing vehicle 20. In Figure 10a the towing vehicle 20 moves into position according to the arrow 45. The locking device 9 is rotated clockwise past a rim 44 on the carrying vehicle 15, in direction of arrow 9a. In Figure 10b the locking device 9 is in locked position against the upper side 21 of a towing vehicle 20. If the carrying vehicle seeks to approach the towing vehicle it will be prevented to do this by the locking device 9 as the locking device 9 will be pushed against both the rim 44 and the upper side 21. Thus oscillation between the towing vehicle 20 and the carrying vehicle 15 is avoided. In Figure 10c the towing vehicle 20 has disconnected from the connecting section 4 of the towing hitch assembly 1. The second part 3 of the towing hitch assembly 1 can thus retract backwards as the towing vehicle 20 continues forward in direction of arrow 46. The upper side 21 is no longer present under the locking device 9 and thus the locking device 9 can rotate, arrow 9b, such that it allows for the retraction of the second part 3. This is further presented in Figure 10d, where the locking device 9 moves with the second part 3 in the direction of the arrow 9c under the rim 44.

The connecting section 4 is preferably made up of a recess 6, see Figure 1 and 2. The recess 6 is positioned closer to the front end 10 than the back end 11 of the second part 3. The recess 6 is in general of triangular shape. The triangular shape is advantageously positioned such that one corner 7 of the triangular shape is in line with the front end 10, see Figure 2. This means that the corner 7 is positioned such that at towing in a straight line, the corner will be in contact with connecting device 22 of a towing vehicle 20, see Figure 9. Further, the recess 6 with a triangular shape can guide the connecting device 22. This is possible as the connecting device will hook up from the base line of the recess 6. That is, the connecting device 22 will pass the carrier vehicle from back to front and thus also along the recess from the base line 42 to the corner 7. The sides of the triangular shape will thus guide the connecting device 22 such that it easily can engage the corner 7. The connecting section 4 further is advantageously provided with a cover plate 13. The cover plate 13 guides the connecting device 22 before it has reached the corner 7. The cover plate 13 prevents the connecting device 22 from extending through the recess 6. The cover plate 13 is mainly guiding the connecting device 22 to the corner 7 where it can protrude upwards freely and be supported by the rim 43 in longitudinal direction. If the connecting device 22 would protrude freely upwards in the whole recess 6, the upper side 21 of a towing vehicle would risk touching the second part 3, and prevent guiding of the connecting device 22 forward in the recess 6. This is not ideal as it could obstruct the free movement of a towing vehicle 20. The cover plate 13 preferably has a rounded edge 43 which keeps an engaged towing vehicle 20 in position within a smaller recess that comprises the corner 7 and the rounded edge 43. This provides for a better operation when towing the carrier vehicle 15.

The retraction device 5 can be seen in Figure 7 and 9. The retraction device 5 is preferably a helical spring. It should be attached to the second part 3 of the towing hitch assembly 1, and to the carrier vehicle 15 frame. The retraction device 5 could also be made from a gas spring 5a or a combination of a gas spring or a helical spring. Other designs are also thinkable of course. It is possible to apply an electrical drive mechanism that retracts the second part 3. It is also possible to apply the towing hitch assembly at an angle and to let gravitation perform the retraction movement. That is the towing hitch assembly 1 is provided with the second part 3 higher than the first part 2 and all at an angle. Then the second part 3 could by gravity slide backwards after disconnection of a towing vehicle 20 has occurred. The operation of the retraction device 5 is to apply a retraction force, to retract the first part from an extended configuration A to the retracted configuration B. It is also an aim to keep the second part 3 in the retracted configuration. By having this way of keeping the second part 3 in retracted position, this provides for possibility to extract the second part 3 without having to unlock any extra locks etc.

It is further disclosed a towing system comprising a towing hitch assembly 1 as described above, a carrier vehicle 15 and a towing vehicle 20.

The carrier vehicle 15 is preferably built from a structure of tubes. The carrier vehicle is preferably adapted for indoor use. Thus it can be made in a very simple manner. The limited travel speed for the carrier vehicle is preferably 15 km/h, more preferably 10 km/h or more preferable 7 km/h, in particular 3 km/h. The low speed limit provides for that the carrier vehicle can have a very simple configuration. The carrier vehicle 15 preferably comprises at least two swivelling wheels 16, see Figure 7. There can be more swivelling wheels 16 if desired. And of course there can be more than four wheels. For example there can be a configuration with two swivelling wheels at the front and back of the carrier vehicle and two wheels around the middle in longitudinal direction. Preferably, in this configuration, the middle wheels are linear wheels with no swivelling function. A preferred configuration is two swivelling wheels 16 at the end where the towing hitch assembly can protrude and two linear wheels 16a at the other end, as seen in Figure 7. This gives a stable operation and good operation when changing direction. Also the maximal total weight of the carrier vehicle 15 is preferred to be 400 kg or preferably below 200 kg. The advantage of providing a maximum total weight of 400 kg, or even 200 kg, is that the basic design can be kept simple. It can be made up by a simple frame work construction.

The towing vehicle 20 is preferably an electrical vehicle. The power to the towing vehicle 20 is preferably provided from an internal battery that is rechargeable. The important design of the towing vehicle is that it is lower than the height over ground where the towing hitch assembly 1 is attached to the carrier vehicle 15. A mayor aspect of the present disclosure is that at operation, the towing vehicle 20 passes in full under the carrier vehicle and engages the connecting section 4 of the second part 3 of the towing hitch assembly. And the towing vehicle 20 then continues its movement in the direction of the towing hitch assembly 1 and extracts the first part, such that the towing hitch assembly 1 attains the extracted configuration as seen in Figure 4. The engagement of the towing vehicle 20 is preferably made by the connecting device 22, i.e. the high point 22 of the towing vehicle 20. The high point/connecting device 22 is preferably a pin 22. The pin 22 can have a spring resilient function such that when it is pressed down from above it moves resiliently downwards. This provides for an easy engagement of the connecting section 4 as the pin can be partly pressed down by first the rear end 11 of the first part and then be more pressed down by the middle part 40 as the towing vehicle 20 moves under the towing hitch assembly 1. When the pin 22 reaches the connecting section 4 it can resiliently extend upwards and thereby engage the recess 6 and finally after guiding of the sides 8 reach the corner 7 of the recess 6. If the recess 6 is not triangular, it will with less efficiency reach the end of the recess 6. After this the towing vehicle 20 can move the first part to its extracted configuration B and in doing that also extract the retraction device 5. The towing vehicle 20 is preferably an AGV or an auto guided vehicle, this means that it can operate on its own without direct human control. This means that it can be programmed to perform tasks and then perform them without any human intervention. Even if it is not preferred the towing vehicle 20 could be programmed to extract the towing hitch assembly 1 from the first configuration A to the second configuration B, by applying a rear ward movement in front of the carrier vehicle 15, and then engage the recess 6 of the towing hitch assembly 1. And after this a change of direction of the AGV would extract the second part 3.

When releasing the first part, the towing vehicle preferably lowers the high point 22. This is performed by a non-disclosed mechanism within the towing vehicle 20. After this is performed the towing vehicle 20 can move freely and the retraction device 5 retracts the first part and the towing hitch assembly attains its retracted position.

## Claims

1. A towing hitch assembly (1), wherein the towing hitch assembly (1) comprises a first part (2) that is connectable to a carrier vehicle (15) and a second part (3) which is attachable to a towing vehicle (20), the second part (3) being slidably moveable relative to the first part (2), between a first retracted configuration (A), and a second extended configuration (B), **characterized in that** when the first part (2) is attached to a carrier vehicle (15), a towing vehicle (20) can by engaging a connecting section (4) of the second part (3), pull the second part (3) to the second extended configuration (B), wherein the second extended configuration (B) allows for towing the carrier vehicle (15), and wherein when a towing vehicle (20) disengages the connecting section, the second part (3) will attend the first retracted configuration (A) automatically, by means of an installed retraction device (5) acting to slidably retract the first part (2).

2. A towing hitch assembly (1) according to claim 1, wherein the retracted second part (3) is kept in the first retracted configuration (A) by means of the retraction device (5).

3. A towing hitch assembly (1) according claim 1 or 2, wherein the retraction device (5, 5a) comprises a helical spring (5) and/or a gas spring (5a).

4. A towing hitch assembly (1) according any of the claims 1 - 3, wherein the connecting section (4) comprises a recess (6).

5. A towing hitch assembly (1) according to claim 4, wherein the recess (6) has a triangular shape, preferably the recess (6) has a corner (7) of said triangular shape positioned in the main towing direction of a carrier vehicle (15), such that when connecting to the recess (6) guiding may be achieved by the angled sides (8) of the triangular shape.

6. A towing hitch assembly (1) according to any of the claims above, wherein a locking device (9) is provided on the second part (3).

7. A towing hitch assembly (1) according to claim 6, wherein the locking device (9) uses a side (21) of a towing vehicle (20) to be kept in locking position, wherein the side (21) is preferably an upper side (21) of a towing vehicle (20).

8. A towing hitch assembly (1) according to claim 6 or 7, wherein the locking device (9) uses gravity to reach the correct positon for being able to engage a towing vehicle (20), preferably the correct position is reached by using a transversal axis that does not run through the centre of gravity of the locking device (9).

9. A towing system comprising a towing vehicle (20), a carrier vehicle (15), and a towing hitch assembly (1) according to any of the claims 1-8 attached to the carrier vehicle (15).

10. A towing system according to claim 9, wherein the carrier vehicle (15) comprises two swivelling wheels (16), preferably four swivelling wheels.

11. A towing system according to claim 9 or 10, wherein the carrier vehicle (15) has a limited travel speed of 15 km/h, preferably 7 km/h, even more preferred 3 km/h, and/or the carrier vehicle (15) has a maximum total weight of 400 kg, preferably 200 kg.

12. A towing system according to any of the claims 9-11, wherein the towing system is adapted for indoor use only.

13. A towing system according to any of the claims 9-12 above, wherein the towing vehicle (20) has a high point (22) that engages the connecting section (4) of the towing hitch assembly (1), such that the towing vehicle (20) in full can pass under the towing hitch assembly (1) for engaging the connecting section (4).

14. A towing system according to any of the claims 9-13, wherein the towing vehicle (20) is an auto guided vehicle, preferably being an electric vehicle.

15. A towing system according to any of the claims 9-14, wherein the width of the towing vehicle (20) is smaller than the width of the carrier vehicle (15).

## Patentansprüche

1. Schleppkupplungsanordnung (1), wobei die Schleppkupplungsanordnung (1) ein erstes Teil (2), das mit einem Trägerfahrzeug (15) verbindbar ist, und ein zweites Teil (3), das an ein Schleppfahrzeug (20) befestigbar ist, umfasst, wobei das zweite Teil (3) gleitend bewegbar relativ zu dem ersten Teil (2) ist, zwischen einer ersten eingefahrenen Konfiguration (A) und einer zweiten ausgefahrenen Konfiguration (B), **dadurch gekennzeichnet, dass,** wenn das erste Teil (2) an einem Trägerfahrzeug (15) befestigt wird, ein Schleppfahrzeug (20) durch Ineingriffbringen eines Verbindungsabschnitts (4) des zweiten Teils (3) das zweite Teil (3) in die zweite ausgefahrene Konfiguration (B) ziehen kann, wobei die zweite ausgefahrene Konfiguration (B) das Schleppen des Trägerfahrzeugs (15) erlaubt, und wobei, wenn ein Schleppfahrzeug (20) den Verbindungsabschnitt außer Eingriff bringt, das zweite Teil (3) die erste eingefahrene Konfiguration (A) automatisch mittels einer eingebauten Einfahrvorrichtung (5), die zum gleitbaren Einfahren des ersten Teils (2) wirksam ist, attendiert.

2. Schleppkupplungsanordnung (1) nach Anspruch 1, wobei das eingefahrene zweite Teil (3) mittels der Einfahrvorrichtung (5) in der ersten eingefahrenen Konfiguration (A) gehalten wird.

3. Schleppkupplungsanordnung (1) nach Anspruch 1 oder 2, wobei die Einfahrvorrichtung (5, 5a) eine Schraubenfeder (5) und/oder eine Gasfeder (5a) umfasst.

4. Schleppkupplungsanordnung (1) nach einem der Ansprüche 1 bis 3, wobei der Verbindungsabschnitt (4) eine Ausnehmung (6) umfasst.

5. Schleppkupplungsanordnung (1) nach Anspruch 4, wobei die Ausnehmung (6) eine dreieckige Form aufweist, die Ausnehmung (6) hat vorzugsweise eine Ecke (7) der dreieckigen Form in der Hauptschlepprichtung eines Trägerfahrzeugs (15) positioniert, sodass beim Verbinden mit der Ausnehmung (6) Führung durch die abgewinkelten Seiten (8) der dreieckigen Form erreicht werden kann.

6. Schleppkupplungsanordnung (1) nach einem der vorstehenden Ansprüche, wobei eine Verriegelungsvorrichtung (9) an dem zweiten Teil (3) bereitgestellt ist.

7. Schleppkupplungsanordnung (1) nach Anspruch 6, wobei die Verriegelungsvorrichtung (9) eine Seite (21) eines Schleppfahrzeugs (20) verwendet, um in Verriegelungsposition gehalten zu werden, wobei die Seite (21) vorzugsweise eine Oberseite (21) eines Schleppfahrzeugs (20) ist.

8. Schleppkupplungsanordnung (1) nach Anspruch 6 oder 7, wobei die Verriegelungsvorrichtung (9) Schwerkraft nutzt, um die richtige Position zu erreichen, um ein Schleppfahrzeug (20) in Eingriff bringen zu können, vorzugsweise wird die richtige Position durch Verwenden einer Querachse erreicht, die nicht durch den Schwerpunkt der Verriegelungsvorrichtung (9) verläuft.

9. Schleppsystem, umfassend ein Schleppfahrzeug (20), ein Trägerfahrzeug (15), und eine Schleppkupplungsanordnung (1) nach einem der Ansprüche 1 bis 8, die an dem Trägerfahrzeug (15) befestigbar ist.

10. Schleppsystem nach Anspruch 9, wobei das Trägerfahrzeug (15) zwei Schwenkräder (16), vorzugsweise vier Schwenkräder, umfasst.

11. Schleppsystem nach Anspruch 9 oder 10, wobei das Trägerfahrzeug (15) eine begrenzte Fahrgeschwindigkeit von 15 km/h, vorzugsweise 7 km/h, noch mehr bevorzugt 3 km/h aufweist, und/oder das Trägerfahrzeug (15) ein maximales Gesamtgewicht von 400 kg, vorzugsweise 200 kg aufweist.

12. Schleppsystem nach einem der Ansprüche 9 bis 11, wobei das Schleppsystem für die Verwendung nur im Innenraum angepasst ist.

13. Schleppsystem nach einem der Ansprüche 9 bis 12 oben, wobei das Schleppfahrzeug (20) einen Hochpunkt (22) aufweist, der den Verbindungsabschnitt (4) der Schleppkupplungsanordnung (1) in Eingriff bringt, sodass das Schleppfahrzeug (20) vollständig unter die Schleppkupplungsanordnung (1) fahren kann, um den Verbindungsabschnitt (4) in Eingriff zu bringen.

14. Schleppsystem nach einem der Ansprüche 9 bis 13, wobei das Schleppfahrzeug (20) ein automatisch geführtes Fahrzeug ist, das vorzugsweise ein Elektrofahrzeug ist.

15. Schleppsystem nach einem der Ansprüche 9 bis 14, wobei die Breite des Schleppfahrzeugs (20) kleiner als die Breite des Trägerfahrzeugs (15) ist.

## Revendications

1. Ensemble d'attelage de remorquage (1), dans lequel l'ensemble d'attelage de remorquage (1) comprend une première partie (2) qui peut être raccordée à un véhicule de transport (15) et une seconde partie (3) qui peut être fixée sur un véhicule de remorquage (20), la seconde partie (3) étant mobile de manière coulissante par rapport à la première partie (2), entre une première configuration rétractée (A), et une seconde configuration étendue (B), **caractérisé en ce que** lorsque la première partie (2) est fixée à un véhicule de transport (15), un véhicule de remorquage (20) peut en venant en prise avec une section de raccordement (4) de la seconde partie (3), tirer la seconde partie (3) vers la seconde configuration étendue (B), dans lequel la seconde configuration étendue (B) permet un remorquage du véhicule de transport (15), et dans lequel lorsqu'un véhicule de remorquage (20) se désengage de la section de raccordement, la seconde partie (3) assistera automatiquement la première configuration rétractée (A), au moyen d'un dispositif de rétraction (5) installé agissant pour rétracter la première partie (2) de manière coulissante.

2. Ensemble d'attelage de remorquage (1) selon la revendication 1, dans lequel la seconde partie rétractée (3) est maintenue dans la première configuration rétractée (A) au moyen du dispositif de rétraction (5).

3. Ensemble d'attelage de remorquage (1) selon la revendication 1 ou 2, dans lequel le dispositif de rétraction (5, 5a) comprend un ressort hélicoïdal (5) et/ou un ressort à gaz (5a).

4. Ensemble d'attelage de remorquage (1) selon l'une quelconque des revendications 1 à 3, dans lequel la section de raccordement (4) comprend un évidement (6).

5. Ensemble d'attelage de remorquage (1) selon la revendication 4, dans lequel l'évidement (6) a une forme triangulaire, de préférence l'évidement (6) a un coin (7) de ladite forme triangulaire positionné dans la direction principale de remorquage d'un véhicule de transport (15), de telle sorte que lors d'un raccordement à l'évidement (6) un guidage peut être réalisé par les côtés inclinés (8) de la forme triangulaire.

6. Ensemble d'attelage de remorquage (1) selon l'une quelconque des revendications précédentes, dans lequel un dispositif de verrouillage (9) est prévu sur la seconde partie (3).

7. Ensemble d'attelage de remorquage (1) selon la revendication 6, dans lequel le dispositif de verrouillage (9) utilise un côté (21) d'un véhicule de remorquage (20) destiné à être maintenu en position de verrouillage, dans lequel le côté (21) est de préférence un côté supérieur (21) d'un véhicule de remorquage (20).

8. Ensemble d'attelage de remorquage (1) selon la revendication 6 ou 7, dans lequel le dispositif de verrouillage (9) utilise la gravité pour atteindre la position correcte pour pouvoir venir en prise avec un véhicule de remorquage (20), de préférence la position correcte est atteinte en utilisant un axe transversal qui ne traverse pas le centre de gravité du dispositif de verrouillage (9).

9. Système de remorquage comprenant un véhicule de remorquage (20), un véhicule de transport (15), et un ensemble d'attelage de remorquage (1) selon l'une quelconque des revendications 1 à 8 fixé au véhicule de transport (15).

10. Système de remorquage selon la revendication 9, dans lequel le véhicule porteur (15) comprend deux roues pivotantes (16), de préférence quatre roues pivotantes.

11. Système de remorquage selon la revendication 9 ou 10, dans lequel le véhicule porteur (15) présente une vitesse de déplacement limitée de 15 km/h, de préférence 7 km/h, encore plus préférablement 3 km/h, et/ou le véhicule de transport (15) a un poids total maximum de 400 kg, de préférence 200 kg.

12. Système de remorquage selon l'une quelconque des revendications 9 à 11, dans lequel le système de remorquage est uniquement adapté à une utilisation en intérieur.

13. Système de remorquage selon l'une quelconque des revendications 9 à 12 précédentes, dans lequel le véhicule de remorquage (20) a un point haut (22) qui vient en prise avec la section de raccordement (4) de l'ensemble d'attelage de remorquage (1), de telle sorte que le véhicule de remorquage (20) entier peut passer sous l'ensemble d'attelage de remorquage (1) pour venir en prise avec la section de raccordement (4).

14. Système de remorquage selon l'une quelconque des revendications 9 à 13, dans lequel le véhicule de remorquage (20) est un véhicule autoguidé, de préférence étant un véhicule électrique.

15. Système de remorquage selon l'une quelconque des revendications 9 à 14, dans lequel la largeur du véhicule de remorquage (20) est plus petite que la largeur du véhicule de transport (15).
